# EUROPÄISCHE PATENTSCHRIFT

(11) **EP 2 472 286 B1**
(45) Veröffentlichungstag und Bekanntmachung des Hinweises auf die Patenterteilung: **31.05.2017**
(21) Anmeldenummer: 11010149.0
(22) Anmeldetag: 22.12.2011
(51) Int. Cl.: G01S 7/527, G01S 15/60, G01S 15/93, G01S 7/52

(54) **Verfahren zur Auswertung von Signalen eines Ultraschallsensors und Vorrichtung zur Umfelderfassung in einem Fahrzeug**
Method for evaluating signals of an ultrasound sensor and device for environmental detection in a vehicle
Procédé d'évaluation de signaux d'un capteur à ultrasons et dispositif de détection d'environnement dans un véhicule

(30) Priorität: 28.12.2010 DE 102010056439
(43) Veröffentlichungstag der Anmeldung: 04.07.2012
(73) Patentinhaber: Valeo Schalter und Sensoren GmbH, 74321 Bietigheim-Bissingen (DE)
(72) Erfinder: Gotzig, Heinrich, 74357 Bönnigheim (DE); Grüdl, Dietmar, 71679 Asperg (DE); Rostocki, Paul-David, 74177 Bad Friedrichshall (DE)

(56) Entgegenhaltungen:
- EP-A1- 2 081 052
- EP-B1- 1 562 050
- DE-A1- 19 645 339
- DE-A1- 19 860 633
- DE-A1-102007 026 688

## Beschreibung

Die Erfindung betrifft ein Verfahren zur Auswertung von Signalen eines Ultraschallsensors der im Oberbegriff des Anspruchs 1 genannten Art sowie eine zugehörige Vorrichtung zur Umfelderfassung in einem Fahrzeug zur Durchführung der Verfahren.

Aus dem Stand der Technik bekannte Fahrerassistenzsysteme, wie beispielsweise ein Einparkhilfesystem, ein Spurwechselassistenzsystem, ein Abstandswarnsystem usw., basieren häufig auf der Ultraschalltechnologie und verwenden zur Abstandsmessung das Echolotverfahren. Dabei wird eine Membran von mindestens einem Ultraschallsensor in Resonanzfrequenz angeregt, wobei der Ultraschallsensor in Reaktion auf die Anregung zu einem vorgegebenen Sendezeitpunkt Ultraschallwellen als Messsignal aussendet. Diese ausgesendeten Ultraschallwellen werden von einem zu erkennenden Objekt reflektiert und regen wiederum als reflektiertes Echosignal die Membran des mindestens einen Ultraschallsensors an. Diese Anregung wird auf ein Piezoelement übertragen, welche diese mechanische Schwingung in ein elektrisches Signal umwandelt und zur Auswertung an eine Auswerte- und Steuereinheit ausgibt. Das elektrische Signal stellt in Verbindung mit dem Sendezeitpunkt die Schallaufzeit und somit den Objektabstand dar. Da nicht nur zu erkennende Hindernisse bzw. Objekte die Ultraschallwellen reflektieren, sondern auch unerwünschte bauartbedingte Objekte oder eine Fahrbahn, sind Maßnahmen vorgesehen, um die unerwünschten Störsignale, wie beispielsweise Bodenreflektionen auszublenden. Üblicherweise werden die Störsignale mittels Schwellwerten bzw. einer Schwellwertkurve ausgeblendet, wobei die Schwellwertkurve aus Stützstellen erzeugt wird, welche jeweils durch eine zeitliche Position und einen Amplitudenwert definiert sind. Hierbei sind die Stützstellen mit einem vorgegebenen festen zeitlichen Abstand zum Sendezeitpunkt und mit einem Amplitudenwert, welcher basierend auf einem korrespondierenden Amplitudenwert eines auszublendenden Störsignalmusters zur vorgegebenen zeitlichen Position bestimmt wird, in einem Speicher im Ultraschalsensor hinterlegt.

In der Patentschrift EP 1 562 050 B1 werden beispielsweise ein Verfahren und eine Vorrichtung zur Anpassung eines Schwellwertes einer Detektionseinrichtung beschrieben. Bei dem beschriebenen Verfahren wird eine adaptive Schwellenregelung bereitgestellt, welche die Detektionsschwelle in Abhängigkeit von äu-ßeren Begebenheiten vom System variiert. Hierbei wird eine Störpegelmessung in einem Zeitintervall durchgeführt, in welchem kein reflektiertes Messsignal erwartet wird. Somit wird eine adaptive Schwellenregelung ermöglicht, deren Detektionsschwelle bzw. Stellgröße in einem Zeitbereich, vorzugsweise am Ende eines Messzyklus, erfasst wird, in welchem kein reflektiertes Nutzsignal mit einem entsprechend hohen Signalpegel vorkommt.

In der Offenlegungsschrift DE 198 60 633 A1 werden ein Verfahren und eine Vorrichtung zum Messen der Geschwindigkeit eines Fahrzeugs relativ zur Fahrbahnoberfläche beschrieben. Das beschriebene Verfahren schlägt vor, die Geschwindigkeit des Fahrzeugs unmittelbar auf einer Fahrbahnoberfläche unter Ausnutzung des Dopplereffekts zu messen und dadurch die Genauigkeit der Geschwindigkeitsmessung unabhängig vom Durchmesser und der Haftung eines Fahrzeugrades auf der Fahrbahnoberfläche zu erhöhen. Zur Ermittlung der Geschwindigkeit können optische, akustische oder elektromagnetische Signale verwendet werden.

EP 2 081 052 A1 offenbart eine Detektionsvorrichtung eines Fahrzeugs mit einer Funktionseinheit zum Senden und Empfangen von Signalen. Es ist vorgesehen, dass die Funktionseinheit zumindest ein erstes und ein weiteres Funktionselement aufweist, deren Signaleingänge einem Vergleich zur Feststellung eines assoziativen Signalaufkommens unterliegen, und bei Ausbleiben der Signale bei einem der Funktionselemente eine Konfiguration dessen Sende-/Empfangsbereich auf einen zu erfassenden Fahrbahngrund derart erfolgt, dass das entsprechende Funktionselementbei Funktionstüchtigkeit zwangsläufig zum Empfang von Signal-Reflexionen eingestellt ist.

Aufgabe der Erfindung ist es, ein Verfahren zur Auswertung von Signalen eines Ultraschallsensors der im Oberbegriff des Anspruchs 1 genannten Art sowie eine korrespondierende Vorrichtung zur Umfelderfassung der im Oberbegriff des Anspruchs 6 genannten Art dahingehend weiterzuentwickeln, dass eine Erweiterung der Funktionalität eines Ultraschallsystems ermöglicht wird.

Diese Aufgabe wird erfindungsgemäß durch ein Verfahren zur Auswertung von Signalen eines Ultraschallsensors mit den Merkmalen des Anspruchs 1 sowie durch eine Vorrichtung zur Umfelderfassung mit den Merkmalen des Anspruchs 6 gelöst. Weitere die Ausführungsformen der Erfindung in vorteilhafter Weise ausgestaltende Merkmale enthalten die Unteransprüche.

Der mit der Erfindung erzielte Vorteil besteht darin, dass ein als Einparkhilfe ausgeführtes Ultraschallsystem in einer weiteren Betriebsart zur Ermittlung einer aktuellen Fahrzeuggeschwindigkeit verwendet werden kann. Diese ermittelte Fahrzeuggeschwindigkeit kann mit anderen Fahrzeuggeschwindigkeiten verglichen werden, die von anderen Systemen im Fahrzeug bereitgestellt werden. Somit kann auf kostengünstige Art und Weise eine zusätzliche redundante Geschwindigkeitsangabe zur Verfügung gestellt werden, mit welcher die Sicherheit während des Fahrzeugbetriebs erhöht werden kann.

Der Grundgedanke der Erfindung basiert darauf, dass durch eine aktive Anpassung des Verlaufs einer Schwellwertkurve in Abhängigkeit von der Betriebsart, entweder in der ersten Betriebsart durch Auswerten der Nutzsignalanteile der Abstand des Fahrzeugs zu einem erkannten Objekt, oder in einer zweiten Betriebsart durch Auswerten von als Bodenreflektionen erkannten Störsignalanteilen die aktuelle Geschwindigkeit des Fahrzeugs ermittelt werden kann. Die Anpassung der Schwellwertkurve an die empfangenen Echosignale erfolgt beispielsweise durch Erhöhen und/oder Absenken von korrespondierenden Schwellwerten der Schwellwertkurve.

Das erfindungsgemäße Verfahren zur Auswertung von Signalen eines Ultraschallsensors sendet zu einem vorgegebenen Sendezeitpunkt ein Messsignal aus und empfängt in Reaktion auf das Messsignal mindestens ein Echosignal und wertet dieses aus. Hierbei wird während der Auswertung jedes empfangene Echosignal mit einer Schwellwertkurve verglichen. In einer ersten Betriebsart wird der Verlauf der Schwellwertkurve so angepasst, dass empfangene Echosignale, deren Amplituden unterhalb der Schwellwertkurve liegen als Störsignalanteile erkannt und ausgeblendet werden, und empfangene Echosignale, deren Amplituden oberhalb der Schwellwertkurve liegen, als Nutzsignalanteile erkannt und zur Ermittlung von Abständen zu erkannten Objekten ausgewertet werden. Erfindungsgemäß wird in einer zweiten Betriebsart der Verlauf der Schwellwertkurve so angepasst, dass als Bodenreflektionen erkannte Störsignalanteile erfasst werden, aus welchen unter Ausnutzung des Dopplereffekts eine Fahrzeuggeschwindigkeit relativ zu einer Fahrbahnoberfläche ermittelt wird.

Das vom Ultraschallsensor empfangene Echosignal setzt sich aus einem von einem zu erkennenden Objekt reflektierten Nutzsignalanteil und einem von der Fahrbahnoberfläche reflektierten zur Abstandsermittlung unerwünschten Störsignalanteil zusammen. Durch eine applikationsspezifische Programmierung der Schwellwertkurve des Ultraschallsensors werden die Störsignalanteile während der Abstandsbestimmung "quasi" herausgefiltert. Um nun in einer weiteren Betriebsart die Fahrzeuggeschwindigkeit über der Fahrbahnoberfläche (Speed over Ground) zu messen, wird die Schwellwertkurve des Ultraschallsensor empfindlicher programmiert und dadurch kann der Teil des Störsignalanteils analysiert werden, der von der Fahrbahnoberfläche reflektiert wird.

Der Dopplereffekt setzt eine Sendeeinheit zum Aussenden von Strahlen mit einer bestimmten Frequenz und eine Empfangseinheit zum Empfangen dieser Strahlen voraus. Die Strahlen können prinzipiell als optische, akustische oder als elektromagnetische Wellen ausgebildet sein. Besteht zwischen der Sendeeinheit und der Empfangseinheit eine Relativbewegung, so dass sich ihr gegenseitiger Abstand vergrößert oder verkleinert, dann nimmt die Empfangseinheit eine andere Frequenz war, als die Sendeeinheit ausgesandt hat. Die Differenz der Sendefrequenz und der Empfangsfrequenz ändert sich durch den Dopplereffekt in proportionaler Abhängigkeit von der Geschwindigkeit der Relativbewegung zwischen der Sendeeinheit und der Empfangseinheit. Aus der Differenz der Sendefrequenz und der Empfangsfrequenz kann die Geschwindigkeit der Relativbewegung ermittelt werden. Zum Messen der Geschwindigkeit eines Fahrzeugs sind die Sendeeinheit und die Empfangseinheit an dem Fahrzeug angeordnet. Die Sendeeinheit sendet Strahlen aus, welche zumindest teilweise von der Fahrbahnoberfläche reflektiert werden, und die reflektierten Strahlen werden von der Empfangseinheit empfangen. Die Fahrbahnoberfläche dient dabei als imaginäre Sendeeinheit, da es für die Empfangseinheit so aussieht, als sende die Fahrbahnoberfläche die reflektierten Strahlen aus. Aus der Differenz der Sendefrequenz und der Empfangsfrequenz kann somit die Geschwindigkeit des Fahrzeugs relativ zur Fahrbahnoberfläche ermittelt werden.

In vorteilhafter Ausgestaltung des erfindungsgemäßen Verfahrens wird die ermittelte Fahrzeuggeschwindigkeit mindestens einer weiteren Fahrzeugfunktion zur Verfügung gestellt. So kann die ermittelte Fahrzeuggeschwindigkeit beispielsweise über eine entsprechende Anzeigeeinheit an den Fahrer ausgegeben und/oder in Fahrzeugdynamiksteuerungs- bzw. Fahrzeugdynamikregelungssystemen eingesetzt werden.

In weiterer vorteilhafter Ausgestaltung des erfindungsgemäßen Verfahrens kann die erste Betriebsart des Ultraschallsensors aktiviert werden, wenn eine aktuelle Fahrzeuggeschwindigkeit einen vorgegebenen ersten Schwellwert unterschreitet. Die erste Betriebsart des Ultraschallsensors kann beispielsweise während eines Einparkvorgangs und/oder einer Staufahrt aktiviert werden. Insbesondere bei niedrigen Geschwindigkeiten und dem damit verbundenen geringen Abstand ist es wichtig, den Fahrer rechtzeitig vor einem Kontakt mit einem erkannten Hindernis bzw. einem vorausfahrenden bzw. nachfolgenden Fahrzeug zu warnen.

In weiterer vorteilhafter Ausgestaltung des erfindungsgemäßen Verfahrens kann die zweite Betriebsart des Ultraschallsensors aktiviert werden, wenn die aktuelle Fahrzeuggeschwindigkeit einen vorgegebenen zweiten Schwellwert überschreitet. Da bei höheren Geschwindigkeiten der Abstand zum Vordermann größer gewählt wird und in der Regel außerhalb der Reichweite des Ultraschallsensor liegt, kann hier der Ultraschallsensor problemlos zur Ermittlung der Geschwindigkeit verwendet werden.

Die erfindungsgemäße Vorrichtung zur Umfelderfassung in einem Fahrzeug umfasst mindestens einen Ultraschallsensor und eine Auswerte- und Steuereinheit, wobei der mindestens eine Ultraschallsensor zu einem vorgegebenen Zeitpunkt ein Messsignal aussendet und in Reaktion auf das Messsignal mindestens ein Echosignal empfängt, wobei die Auswerte- und Steuereinheit während der Auswertung jedes empfangene Echosignal mit einer Schwellwertkurve vergleicht, und wobei die Auswerte- und Steuereinheit in einer ersten Betriebsart den Verlauf der Schwellwertkurve so anpasst, dass empfangene Echosignale, deren Amplituden unterhalb der Schwellwertkurve liegen, als Störsignalanteile erkennbar und ausblendbar sind bzw. erkannt und ausgeblendet werden, und empfangene Echosignale, deren Amplituden oberhalb der Schwellwertkurve liegen, als Nutzsignalanteile erkennbar bzw. erkannt werden und zur Ermittlung von Abständen zu erkannten Objekten auswertbar sind bzw. ausgewertet werden. Erfindungsgemäß passt die Auswerte- und Steuereinheit in einer zweiten Betriebsart den Verlauf der Schwellwertkurve so an, dass als Bodenreflektionen erkannte Störsignalanteile erfassbar und auswertbar sind bzw. erfasst und ausgewertet werden, wobei die Auswerte- und Steuereinheit aus den erfassten als Bodenreflektionen erkannten Störsignalanteilen unter Ausnutzung des Dopplereffekts eine Fahrzeuggeschwindigkeit relativ zu einer Fahrbahnoberfläche ermittelt.

In vorteilhafter Ausgestaltung der erfindungsgemäßen Vorrichtung stellt die Auswerte- und Steuereinheit die ermittelte Fahrzeuggeschwindigkeit mindestens einer weiteren Fahrzeugfunktion zur Verfügung.

In weiterer vorteilhafter Ausgestaltung der erfindungsgemäßen Vorrichtung aktiviert die Auswerte- und Steuereinheit die erste Betriebsart des Ultraschallsensors, wenn eine aktuelle Fahrzeuggeschwindigkeit einen vorgegebenen ersten Schwellwert unterschreitet. Die erste Betriebsart des Ultraschallsensors kann beispielsweise während eines Einparkvorgangs und/oder einer Staufahrt aktiviert werden.

In weiterer vorteilhafter Ausgestaltung der erfindungsgemäßen Vorrichtung aktiviert die Auswerte- und Steuereinheit die zweite Betriebsart des Ultraschallsensors, wenn die aktuelle Fahrzeuggeschwindigkeit einen vorgegebenen zweiten Schwellwert überschreitet.

Nachfolgend werden Ausführungsbeispiele der Erfindung anhand einer zeichnerischen Darstellung näher erläutert.

In der Darstellung zeigt:
- Fig. 1: ein schematisches Blockdiagramm eines Ausführungsbeispiels einer erfindungsgemäßen Vorrichtung zur Umfelderfassung in einem Fahrzeug.
- Fig. 2: eine schematische Darstellung eines vorderen Fahrzeugumfeldes.
- Fig. 3: ein Kennliniendiagramm zur Darstellung von Nutzsignalanteilen und Störsignalanteilen von empfangenen Echosignalen sowie einer Schwellwertkurve in einer ersten Betriebsart des Ultraschallsensors aus Fig. 1.
- Fig. 4: ein Kennliniendiagramm zur Darstellung von Nutzsignalanteilen und Störsignalanteilen von empfangenen Echosignalen sowie einer Schwellwertkurve in einer zweiten Betriebsart des Ultraschallsensors aus Fig. 1.
- Fig. 5: ein Flussdiagramm eines Ausführungsbeispiels eines erfindungsgemäßen Verfahrens zur Auswertung von Signalen eines Ultraschallsensors.

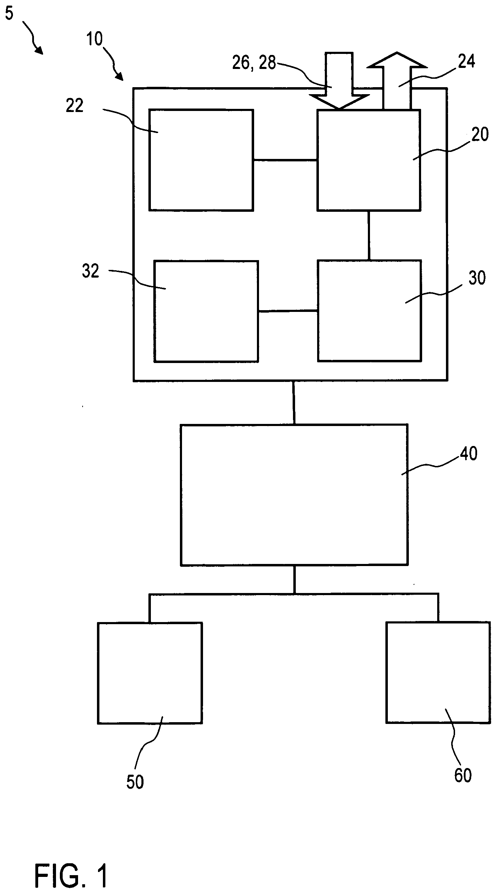

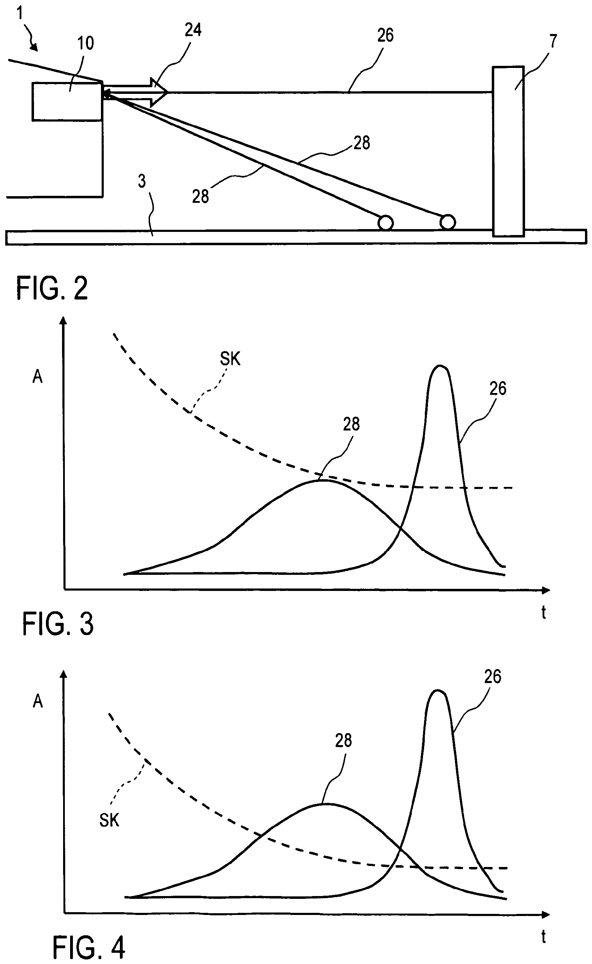

Fig. 1 zeigte ein Ausführungsbeispiel einer erfindungsgemäßen Vorrichtung 5 zur Umfelderfassung in einem Fahrzeug 1; Fig. 2 zeigt eine schematische Darstellung eines vorderen Fahrzeugumfeldes, Fig. 3 zeigt Nutzsignalanteile 26 und Störsignalanteile 28 von empfangenen Echosignalen sowie eine Schwellwertkurve SK in einer ersten Betriebsart eines Ultraschallsensors 10 und Fig. 4 zeigt Nutzsignalanteile 26 und Störsignalanteile 28 von empfangenen Echosignalen sowie eine Schwellwertkurve SK in einer zweiten Betriebsart des Ultraschallsensors 10.

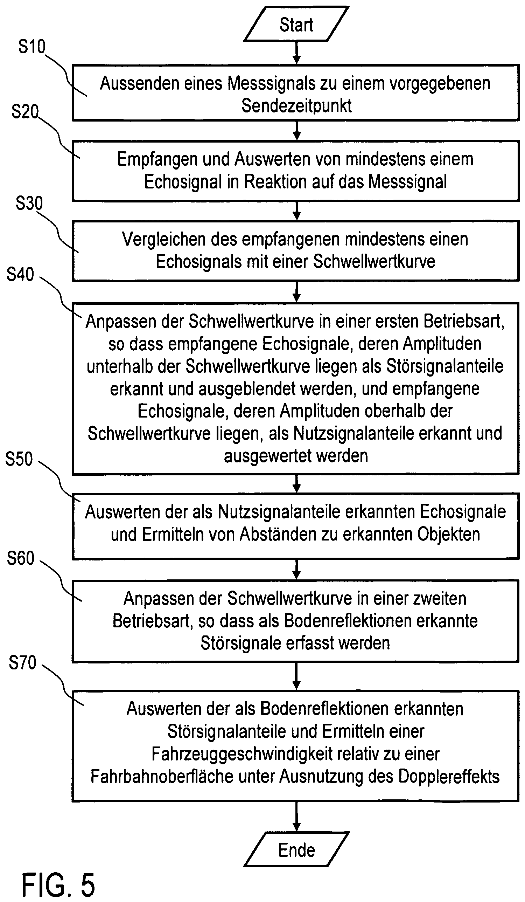

Wie aus Fig. 1 und 2 ersichtlich ist, umfasst ein Ausführungsbeispiel einer Vorrichtung 5 zur Umfelderfassung in einem Fahrzeug 1 mehrere Ultraschallsensoren, von welchen stellvertretend ein Ultraschallsensor 10 dargestellt ist. Im dargestellten Ausführungsbeispiel umfasst der Ultraschallsensor 10 eine Sende/Empfangseinheit 20, einen Signalgenerator 22 zur Erzeugung eines Messsignals 24, welches über die Sende/Empfangseinheit 20 ausgesendet wird, eine Auswerte- und Steuereinheit 30 und eine Speichereinheit 32, in welcher verschiedene Schwellwertkurven SK gespeichert sind. In Reaktion auf das Messsignal empfängt der Ultraschallsensor 10 über die Sende/Empfangseinheit 20 mindestens ein Echosignal 26, 28, welches von der Auswerte- und Steuereinheit 30 auswertet wird. Während der Auswertung vergleicht die Auswerte- und Steuereinheit 30 jedes empfangene Echosignal 26, 28 mit einer Schwellwertkurve SK, die beispielhaft in Fig. 4 und 5 dargestellt ist.

Wie aus Fig. 1 bis 4 ersichtlich ist, setzt sich das vom Ultraschallsensor 10 empfangene Echosignal 26, 28 aus einem von einem zu erkennenden Hindernis 7 reflektierten Nutzsignalanteil 26 und einem von einer Fahrbahnoberfläche 3 reflektierten Störsignalanteil 28 zusammen.

Wie aus Fig. 3 ersichtlich ist, passt die Auswerte- und Steuereinheit 30 den Verlauf der gestrichelt dargestellten Schwellwertkurve SK in einer ersten Betriebsart so an, dass empfangene Echosignale 24, 26, deren Amplituden unterhalb der Schwellwertkurve SK liegen, als Störsignalanteile 28 erkannt und ausgeblendet werden können, und empfangene Echosignale 24, 26, deren Amplituden oberhalb der Schwellwertkurve SK liegen, als Nutzsignalanteile 26 erkannt und zur Ermittlung von Abständen zu erkannten Objekten 7 ausgewertet werden können. Wie aus Fig. 3 ersichtlich ist, werden alle Störsignalanteile, welche unterhalb der gestrichelt dargestellten Schwellwertkurve SK liegen herausgefiltert und nur die oberhalb der Schwellwertkurve SK liegenden Nutzsignalanteile 26 werden ausgewertet.

Erfindungsgemäß passt die Auswerte- und Steuereinheit 30 in einer zweiten Betriebsart den Verlauf der Schwellwertkurve SK so an, dass als Bodenreflektionen erkannte Störsignalanteile 28 erfasst und ausgewertet werden können. Die korrespondierende Schwellwertkurve SK ist in Fig. 4 dargestellt. Die Auswerte- und Steuereinheit 30 ermittelt aus den erfassten als Bodenreflektionen erkannten Störsignalanteilen 28 unter Ausnutzung des Dopplereffekts eine Fahrzeuggeschwindigkeit relativ zur Fahrbahnoberfläche 3. Wie aus Fig. 4 ersichtlich ist, werden die oberhalb der gestrichelt dargestellten Schwellwertkurve SK liegenden Störsignalanteil verwendet, um die Fahrzeuggeschwindigkeit zu ermitteln.

Wie aus Fig. 1 weiter ersichtlich ist, stellt die Auswerte- und Steuereinheit 30 den ermittelten Abstand in der ersten Betriebsart über ein korrespondierendes Steuergerät 40 einem Einparkassistenzsystem 50 zur Verfügung. In der zweiten Betriebsart stellt die Auswerte- und Steuereinheit 30 die ermittelte Fahrzeuggeschwindigkeit über ein korrespondierendes Steuergerät 40 mindestens einer weiteren Fahrzeugfunktion 60 zur Verfügung. So kann die ermittelte Fahrzeuggeschwindigkeit beispielsweise über eine entsprechende Ausgabeeinheit 60 an den Fahrer ausgegeben und/oder in Fahrzeugdynamiksteuerungs- bzw. Fahrzeugdynamikregelungssystemen redundant zu von anderen Systemen im Fahrzeug 1 ermittelten Fahrzeuggeschwindigkeiten eingesetzt werden, um die Fahrsicherheit zu erhöhen.

Die Auswerte- und Steuereinheit 30 aktiviert die erste Betriebsart des Ultraschallsensors 10, wenn eine aktuelle Fahrzeuggeschwindigkeit einen vorgegebenen ersten Schwellwert unterschreitet. So kann die erste Betriebsart des Ultraschallsensors 10 beispielsweise während eines Einparkvorgangs und/oder einer Staufahrt aktiviert werden.

Des Weiteren aktiviert die Auswerte- und Steuereinheit 30 die zweite Betriebsart des Ultraschallsensors 10, wenn die aktuelle Fahrzeuggeschwindigkeit einen vorgegebenen zweiten Schwellwert überschreitet. Die beiden Schwellwerte können als identische Werte mit entsprechenden Hysteresen oder als unterschiedliche Werte vorgegeben werden.

Fig. 5 zeigt ein Ausführungsbeispiel eines erfindungsgemäßen Verfahrens zur Auswertung von Signalen eines Ultraschallsensors 26, 28.

Wie aus Fig. 5 ersichtlich ist, sendet der Ultraschallsensor 10 in einem Schritt S10 zu einem vorgegebenen Sendezeitpunkt ein Messsignal 24 aus. In einem Schritt S20 wird in Reaktion auf das Messsignal 24 mindestens ein Echosignal 26, 28 empfangen und ausgewertet. Während der Auswertung wird im Schritt S30 jedes empfangene Echosignal 26, 28 mit einer Schwellwertkurve SK verglichen. Gemäß Schritt S40 wird in einer ersten Betriebsart der Verlauf der Schwellwertkurve SK so angepasst, dass empfangene Echosignale 26, 28, deren Amplituden unterhalb der Schwellwertkurve SK liegen als Störsignalanteile 28 erkannt und ausgeblendet werden, und empfangene Echosignale 26, 28, deren Amplituden oberhalb der Schwellwertkurve SK liegen, als Nutzsignalanteile 26 erkannt und im Schritt S50 zur Ermittlung von Abständen zu erkannten Objekten 7 ausgewertet werden. Erfindungsgemäß wird der Verlauf der Schwellwertkurve SK gemäß Schritt S60 in einer zweiten Betriebsart so angepasst, dass als Bodenreflektionen erkannte Störsignalanteile 28 erfasst werden, aus welchen unter Ausnutzung des Dopplereffekts im Schritt S70 eine Fahrzeuggeschwindigkeit relativ zu einer Fahrbahnoberfläche 3 ermittelt wird.

Die Anpassung der Schwellwertkurve SK erfolgt beispielsweise durch Erhöhen bzw. Verkleinern von korrespondierenden Amplitudenwerten der Schwellwertkurve SK.

## Patentansprüche

1. Verfahren zur Auswertung von Signalen eines Ultraschallsensors, wobei zu einem vorgegebenen Sendezeitpunkt ein Messsignal (24) ausgesendet und in Reaktion auf das Messsignal (24) mindestens ein Echosignal (26, 28) empfangen und ausgewertet wird, wobei während der Auswertung jedes empfangene Echosignal (26, 28) mit einer Schwellwertkurve (SK) verglichen wird, wobei in einer ersten Betriebsart der Verlauf der Schwellwertkurve (SK) so angepasst wird, dass empfangene Echosignale (26, 28), deren Amplituden unterhalb der Schwellwertkurve (SK) liegen als Störsignalanteile (28) erkannt und ausgeblendet werden, und empfangene Echosignale (26, 28), deren Amplituden oberhalb der Schwellwertkurve (SK) liegen, als Nutzsignalanteile (26) erkannt und zur Ermittlung von Abständen zu erkannten Objekten (7) ausgewertet werden,
**dadurch gekennzeichnet,**
**dass** in einer zweiten Betriebsart der Verlauf der Schwellwertkurve (SK) so angepasst wird, dass als Bodenreflektionen erkannte Störsignalanteile (28) erfasst werden, aus welchen unter Ausnutzung des Dopplereffekts eine Fahrzeuggeschwindigkeit relativ zu einer Fahrbahnoberfläche (3) ermittelt wird.

2. Verfahren nach Anspruch 1,
**dadurch gekennzeichnet,**
**dass** die ermittelte Fahrzeuggeschwindigkeit mindestens einer weiteren Fahrzeugfunktion (60) zur Verfügung gestellt wird.

3. Verfahren nach Anspruch 1 oder 2,
**dadurch gekennzeichnet,**
**dass** die erste Betriebsart des Ultraschallsensors (10) aktiviert wird, wenn eine aktuelle Fahrzeuggeschwindigkeit einen vorgegebenen Schwellwert unterschreitet.

4. Verfahren nach Anspruch 3,
**dadurch gekennzeichnet,**
**dass** die erste Betriebsart des Ultraschallsensors (10) während eines Einparkvorgangs und/oder einer Staufahrt aktiviert wird.

5. Verfahren nach einem der vorherigen Ansprüche 1 bis 4,
**dadurch gekennzeichnet,**
**dass** die zweite Betriebsart des Ultraschallsensors (10) aktiviert wird, wenn die aktuelle Fahrzeuggeschwindigkeit einen vorgegebenen Schwellwert überschreitet.

6. Vorrichtung zur Umfelderfassung in einem Fahrzeug (1), insbesondere zur Durchführung des Verfahrens nach einem der vorherigen Ansprüche 1 bis 5, mit mindestens einem Ultraschallsensor (10) und einer Auswerte- und Steuereinheit (30), wobei der mindestens eine Ultraschallsensor (10) zu einem vorgegebenen Zeitpunkt ein Messsignal (24) aussendet und in Reaktion auf das Messsignal mindestens ein Echosignal (26, 28) empfängt, wobei die Auswerte- und Steuereinheit (30) während der Auswertung jedes empfangene Echosignal (26, 28) mit einer Schwellwertkurve (SK) vergleicht, und wobei die Auswerte- und Steuereinheit (30) in einer ersten Betriebsart den Verlauf der Schwellwertkurve (SK) so anpasst, dass empfangene Echosignale (26, 28), deren Amplituden unterhalb der Schwellwertkurve (SK) liegen, als Störsignalanteile (28) erkannt und ausgeblendet werden und empfangene Echosignale (26, 28), deren Amplituden oberhalb der Schwellwertkurve (SK) liegen, als Nutzsignalanteile (26) erkannt und zur Ermittlung von Abständen zu erkannten Objekten (7) ausgewertet werden,
**dadurch gekennzeichnet,**
**dass** die Auswerte- und Steuereinheit (30) in einer zweiten Betriebsart den Verlauf der Schwellwertkurve (SK) so anpasst, dass als Bodenreflektionen erkannte Störsignalanteile (28) erfasst und ausgewertet werden, wobei die Auswerte- und Steuereinheit (30) aus den erfassten als Bodenreflektionen erkannten Störsignalanteilen (28) unter Ausnutzung des Dopplereffekts eine Fahrzeuggeschwindigkeit relativ zu einer Fahrbahnoberfläche (3) ermittelt.

7. Vorrichtung nach Anspruch 6,
**dadurch gekennzeichnet,**
**dass** die Auswerte- und Steuereinheit (30) die ermittelte Fahrzeuggeschwindigkeit mindestens einer weiteren Fahrzeugfunktion (50, 60) zur Verfügung stellt.

8. Vorrichtung nach Anspruch 6 oder 7,
**dadurch gekennzeichnet,**
**dass** die Auswerte- und Steuereinheit (30) die erste Betriebsart des Ultraschallsensors (10) aktiviert, wenn eine aktuelle Fahrzeuggeschwindigkeit einen vorgegebenen Schwellwert unterschreitet.

9. Vorrichtung nach Anspruch 8,
**dadurch gekennzeichnet,**
**dass** die Auswerte- und Steuereinheit (30) die erste Betriebsart des Ultraschallsensors (10) während eines Einparkvorgangs und/oder einer Staufahrt aktiviert.

10. Vorrichtung nach einem der vorherigen Ansprüche 6 bis 9,
**dadurch gekennzeichnet,**
**dass** die Auswerte- und Steuereinheit (30) die zweite Betriebsart des Ultraschallsensors (10) aktiviert, wenn die aktuelle Fahrzeuggeschwindigkeit einen vorgegebenen Schwellwert überschreitet.

## Claims

1. Method for evaluating signals from an ultrasonic sensor, a measurement signal (24) being emitted at a predefined transmission time and at least one echo signal (26, 28) being received and evaluated in response to the measurement signal (24), each received echo signal (26, 28) being compared with a threshold value curve (SK) during the evaluation, the profile of the threshold value curve (SK) being adapted in a first operating mode in such a manner that received echo signals (26, 28) whose amplitudes are below the threshold value curve (SK) are identified as interfering signal components (28) and are hidden, and received echo signals (26, 28) whose amplitudes are above the threshold value curve (SK) are identified as useful signal components (26) and are evaluated in order to determine distances from identified objects (7),
**characterized in that**
the profile of the threshold value curve (SK) is adapted in a second operating mode in such a manner that interfering signal components (28) identified as ground reflections are recorded and are used to determine a vehicle speed relative to a road surface (3) using the Doppler effect.

2. Method according to Claim 1,
**characterized in that**
the determined vehicle speed is made available to at least one further vehicle function (60).

3. Method according to Claim 1 or 2,
**characterized in that**
the first operating mode of the ultrasonic sensor (10) is activated if a current vehicle speed falls below a predefined threshold value.

4. Method according to Claim 3,
**characterized in that**
the first operating mode of the ultrasonic sensor (10) is activated during a parking operation and/or a traffic jam.

5. Method according to one of the preceding Claims 1 to 4,
**characterized in that**
the second operating mode of the ultrasonic sensor (10) is activated if the current vehicle speed exceeds a predefined threshold value.

6. Apparatus for detecting the environment in a vehicle (1), in particular for carrying out the method according to one of the preceding Claims 1 to 5, having at least one ultrasonic sensor (10) and an evaluation and control unit (30), the at least one ultrasonic sensor (10) emitting a measurement signal (24) at a predefined time and receiving at least one echo signal (26, 28) in response to the measurement signal, the evaluation and control unit (30) comparing each received echo signal (26, 28) with a threshold value curve (SK) during the evaluation, and the evaluation and control unit (30) adapting the profile of the threshold value curve (SK) in a first operating mode in such a manner that received echo signals (26, 28) whose amplitudes are below the threshold value curve (SK) are identified as interfering signal components (28) and are hidden, and received echo signals (26, 28) whose amplitudes are above the threshold value curve (SK) are identified as useful signal components (26) and are evaluated in order to determine distances from identified objects (7),
**characterized in that**
the evaluation and control unit (30) adapts the profile of the threshold value curve (SK) in a second operating mode in such a manner that interfering signal components (28) identified as ground reflections are recorded and evaluated, the evaluation and control unit (30) determining a vehicle speed relative to a road surface (3) from the recorded interfering signal components (28) identified as ground reflections using the Doppler effect.

7. Apparatus according to Claim 6,
**characterized in that**
the evaluation and control unit (30) makes the determined vehicle speed available to at least one further vehicle function (50, 60).

8. Apparatus according to Claim 6 or 7,
**characterized in that**
the evaluation and control unit (30) activates the first operating mode of the ultrasonic sensor (10) if a current vehicle speed falls below a predefined threshold value.

9. Apparatus according to Claim 8,
**characterized in that**
the evaluation and control unit (30) activates the first operating mode of the ultrasonic sensor (10) during a parking operation and/or a traffic jam.

10. Apparatus according to one of the preceding Claims 6 to 9,
**characterized in that**
the evaluation and control unit (30) activates the second operating mode of the ultrasonic sensor (10) if the current vehicle speed exceeds a predefined threshold value.

## Revendications

1. Procédé d'évaluation de signaux d'un capteur à ultrasons, dans lequel un signal de mesure (24) est émis à un instant d'émission prédéterminé et au moins un signal d'écho (26, 28) est reçu et est évalué en réaction au signal de mesure (24), dans lequel, pendant l'évaluation, chaque signal d'écho reçu (26, 28) est comparé à une courbe de valeurs de seuil (SK), dans lequel, dans un premier mode de fonctionnement, l'évolution de la courbe de valeurs de seuil (SK) est adaptée de manière à ce que des signaux d'écho reçus (26, 28), dont les amplitudes se situent en-dessous de la courbe de valeurs de seuil (SK), soient détectés en tant que composantes de signaux parasites (28) et soient masqués, et à ce que des signaux d'écho reçus (26, 28), dont les amplitudes se situent au-dessus de la courbe de valeurs de seuil (SK), soient détectés en tant que composantes de signaux utiles (26) et soient évalués pour déterminer des distances d'objets détectés (7),
**caractérisé en ce que**, dans un deuxième mode de fonctionnement, l'évolution de la courbe de valeurs de seuil (SK) est adaptée de manière à détecter des composantes de signaux parasites (28) reconnues comme étant des réflexions par le sol, à partir desquelles une vitesse du véhicule par rapport à une surface routière (3) est déterminée par exploitation de l'effet Doppler.

2. Procédé selon la revendication 1, **caractérisé en ce que** la vitesse déterminée du véhicule est mise à disposition d'au moins une autre fonction de véhicule (60).

3. Procédé selon la revendication 1 ou 2, **caractérisé en ce que** le premier mode de fonctionnement du capteur à ultrasons (10) est activé lorsqu'une vitesse actuelle du véhicule s'abaisse en-dessous d'une valeur de seuil prédéterminée.

4. Procédé selon la revendication 3, **caractérisé en ce que** le premier mode de fonctionnement du capteur à ultrasons (10) est activé pendant un processus de stationnement et/ou un embouteillage.

5. Procédé selon l'une quelconque des revendications précédentes 1 à 4, **caractérisé en ce que** le deuxième mode de fonctionnement du capteur à ultrasons (10) est activé lorsque la vitesse actuelle du véhicule dépasse une valeur de seuil prédéterminée.

6. Dispositif de détection d'environnement dans un véhicule (1), notamment pour la mise en oeuvre du procédé selon l'une quelconque des revendications précédentes 1 à 5, comportant au moins un capteur à ultrasons (10) et une unité de d'évaluation et de commande (30), dans lequel l'au moins un capteur à ultrasons (10) émet un signal de mesure (24) à un instant prédéterminé et reçoit au moins un signal d'écho (26, 28) en réaction au signal de mesure, dans lequel l'unité d'évaluation et de commande (30), pendant l'évaluation, compare chaque signal d'écho reçu (26, 28) à une courbe de valeurs de seuil (SK), et dans lequel l'unité d'évaluation et de commande (30), dans un premier mode de fonctionnement, adapte l'évolution de la courbe de valeurs de seuil (SK) de manière à ce que des signaux d'écho reçus (26, 28), dont les amplitudes se situent en-dessous de la courbe de valeurs de seuil (SK), soient détectés en tant que composantes de signaux parasites (28) et soient masqués, et à ce que des signaux d'écho reçus (26, 28), dont les amplitudes se situent au-dessus de la courbe de valeurs de seuil (SK), soient détectés en tant que composantes de signaux utiles (26) et soient évalués pour déterminer des distances d'objets détectés (7), **caractérisé en ce que** l'unité d'évaluation et de commande (30), dans un deuxième mode de fonctionnement, adapte l'évolution de la courbe de valeurs de seuil (SK) de manière à ce que des composantes de signaux parasites (28) reconnues comme étant des réflexions par le sol soient détectées et évaluées, dans lequel l'unité d'évaluation et de commande (30) détermine, par exploitation de l'effet Doppler, une vitesse du véhicule par rapport à une surface routière (3) à partir des composantes de signaux parasites (28) détectées reconnues comme étant des réflexions par le sol.

7. Dispositif selon la revendication 6, **caractérisé en ce que** l'unité d'évaluation et de commande (30) met à disposition d'au moins une autre fonction de véhicule (50, 60) la vitesse déterminée du véhicule.

8. Dispositif selon la revendication 6 ou 7, **caractérisé en ce que** l'unité d'évaluation et de commande (30) active le premier mode de fonctionnement du capteur à ultrasons (10) lorsqu'une vitesse actuelle du véhicule s'abaisse en-dessous d'une valeur de seuil prédéterminée.

9. Dispositif selon la revendication 8, **caractérisé en ce que** l'unité d'évaluation et de commande (30) active le premier mode de fonctionnement du capteur à ultrasons (10) pendant un processus de stationnement et/ou un embouteillage.

10. Dispositif selon l'une quelconque des revendications précédentes 6 à 9, **caractérisé en ce que** l'unité d'évaluation et de commande (30) active le deuxième mode de fonctionnement du capteur à ultrasons (10) lorsque la vitesse actuelle du véhicule dépasse une valeur de seuil prédéterminée.
